# EUROPÄISCHE PATENTSCHRIFT

(11) **EP 3 700 788 B1**
(45) Veröffentlichungstag und Bekanntmachung des Hinweises auf die Patenterteilung: **10.05.2023**
(21) Anmeldenummer: 18766171.5
(22) Anmeldetag: 03.09.2018
(51) Int. Cl.: B60T 13/68, B60T 8/32, B60T 8/36, B60T 8/48

(54) **ACHSVENTILMODUL UND RELAISVENTILMODUL EINER DRUCKLUFTBREMSANLAGE**
AXLE VALVE MODULE AND RELAY VALVE MODULE FOR A PNEUMATIC BRAKE SYSTEM
MODULE DE SOUPAPES D'ESSIEU ET MODULE DE SOUPAPE RELAIS POUR UN SYSTÈME DE FREINS PNEUMATIQUE

(30) Priorität: 26.10.2017 DE 102017009954
(43) Veröffentlichungstag der Anmeldung: 02.09.2020
(73) Patentinhaber: ZF CV Systems Europe BV, 1170 Brussels (BE)
(72) Erfinder: BIALON, Rafal, 55-200 Olawa (PL); OTREMBA, Robert, 30952 Ronnenberg (DE); SCHMIDT, Detlef, 30989 Gehrden (DE)
(74) Vertreter: Rabe, Dirk-Heinrich
(86) Internationale Anmeldenummer: PCT/EP2018/073624
(87) Internationale Veröffentlichungsnummer: WO 2019/081101

(56) Entgegenhaltungen:
- EP-A1- 0 547 407
- EP-A1- 0 616 931
- EP-A2- 1 826 085
- JP-A- H01 220 787

## Beschreibung

Die Erfindung betrifft ein Achsventilmodul einer Druckluftbremsanlage für die Betätigung der Radbremsen einer Fahrzeugachse eines Radfahrzeugs, mit einem Relaisventil, an dessen Steuerdruckeingang eine Steuerdruckleitung angeschlossen ist, die über ein Umschaltventil wechselweise mit einer einen eingesteuerten Bremsdruck führenden Bremsdruckleitung oder mit einer einen Vorratsdruck führenden Vorratsdruckleitung verbindbar ist, und mit jeweils einem ABS-Einlassventil sowie einem ABS-Auslassventil für mindestens einen Radbremszylinder jeder Seite der Fahrzeugachse, welche jeweils als ein druckgesteuertes Membranventil mit einem zugeordneten Vorsteuerventil ausgebildet sind, wobei diese Vorsteuerventile als getaktet steuerbare 3/2-Wege-Magnetschaltventile ausgeführt sind, über die jeweils ein Steuerdruckraum des zugeordneten Membranventils wechselweise mit einem an einer an den Arbeitsdruckausgang des Relaisventils angeschlossenen Achsbremsleitung beziehungsweise an der Steuerdruckleitung des Relaisventils abgegriffenen Steuerdruck oder mit dem Umgebungsdruck beaufschlagbar ist.

Außerdem ist ein Relaisventilmodul einer Druckluftbremsanlage für die Betätigung von Radbremsen eines Radfahrzeugs offenbart, mit einem Relaisventil, an dessen Steuerdruckeingang eine Steuerdruckleitung angeschlossen ist, die über ein Umschaltventil wechselweise mit einer einen eingesteuerten Bremsdruck führenden Bremsdruckleitung oder mit einer einen Vorratsdruck führenden Vorratsdruckleitung verbindbar ist.

In der EP 1 826 085 A2 ist eine Druckluftbremsanlage eines Radfahrzeugs beschrieben, bei der die Steuerventile zur Betätigung der Radbremsen jeder Fahrzeugachse in einem Achsventilmodul zusammengefasst sind. Zumindest das Achsventilmodul der Hinterachse umfasst ein Relaisventil und jeweils ein ABS-Einlassventil sowie ein ABS-Auslassventil für die Radbremszylinder beider Seiten der Hinterachse. Ein weiteres Achsventilmodul ist aus EP 0 547 407 A bekannt.

Bei moderneren Ausführungen eines derartigen Achsventilmoduls der WABCO GmbH sind sowohl das Relaisventil als auch die ABS-Einlassventile und die ABS-Auslassventile jeder Seite der Fahrzeugachse jeweils als eine Membranventileinheit ausgeführt, wie sie beispielsweise aus der DE 10 2014 012 596 A1 oder der DE 10 2014 012 712 A1 bekannt ist. Jede dieser Membranventileinheiten weist ein Einlassmembranventil und ein Auslassmembranventil auf, bei denen jeweils ein an die jeweilige Membran des betreffenden Membranventils angrenzender Steuerdruckraum über ein zugeordnetes Vorsteuerventil wechselweise mit einem hohen Steuerdruck oder dem Umgebungsdruck beaufschlagbar ist. Die Vorsteuerventile sind als getaktet steuerbare 3/2-Wege-Magnetschaltventile ausgebildet. Bei anliegendem hohem Steuerdruck sind die Membranventile geschlossen. Bei anliegendem Umgebungsdruck sind die Membranventile geöffnet, so dass die Arbeitsdruckausgänge über das jeweilige Einlassmembranventil mit dem betreffenden Arbeitsdruckeingang und über das jeweilige Auslassmembranventil mit einem Entlüftungsausgang verbunden sind.

Um unabhängig von der Betätigung eines Bremspedals durch den Fahrer und der ABS-Steuerung der Radbremsen über die ABS-Einlassventile und die ABS-Auslassventile eine Betätigung der Radbremsen im Rahmen von Fahrsicherheitsfunktionen, wie einer Antriebsschlupfregelung (ASR) beziehungsweise einer automatischen Traktionskontrolle (ATC), einer Kippstabilitätskontrolle (RSC), einer elektronischen Stabilitätskontrolle (ESC) beziehungsweise einem elektronischen Stabilitätsprogramm (ESP) und einer externen Verzögerungsanforderung (XBR), zu ermöglichen, ist dem Steuerdruckeingang des Relaisventils ein Umschaltventil vorgeschaltet, mittels dem dieser wechselweise mit einer einen Bremsdruck führenden Bremsdruckleitung oder mit einer einen Vorratsdruck führenden Vorratsdruckleitung verbindbar ist. Der Bremsdruck wird üblicherweise durch die Betätigung eines Bremspedals über ein mit diesem mechanisch verbundenen Bremspedalventil eingestellt, er kann jedoch bei der Verwendung eines sogenannten elektronischen Bremspedals als Bremswertgeber auch mittels eines elektropneumatischen Bremsventils eingestellt werden. Der Vorratsdruck wird üblicherweise von einer Druckluftversorgungsanlage bereitgestellt und bildet den maximal verfügbaren Bremsdruck.

Aufgrund von Bauteiltoleranzen bei den ABS-Ventilen und deren Vorsteuerventilen kann es bei bestimmten Funktionen, bei denen die Bremskraft auf beiden Seiten der Fahrzeugachse gleich groß sein soll, wie bei einer elektronischen Bremskraftbegrenzung (EBL) und einer automatischen Notbremsung durch den Bremsassistenten eines Abstandsgeschwindigkeitsregelsystems (ACC), zu unterschiedlich hohen Bremsdrücken in den Radbremszylindern beider Seiten der Fahrzeugachse und damit zur Destabilisierung des Radfahrzeugs kommen.

Der vorliegenden Erfindung lag daher die Aufgabe zu Grunde, ein Achsventilmodul einer Druckluftbremsanlage der eingangs genannten Bauart auf einfache und kostengünstige Weise derart weiterzubilden, dass im Rahmen bestimmter Fahrsicherheitsfunktionen die Einstellung eines sehr weitgehend exakt gleichen Bremsdruckes in den Radbremszylindern beider Seiten der Fahrzeugachse möglich ist. Des Weiteren ist ein entsprechendes Relaisventilmodul einer Druckluftbremsanlage offenbart, mittels dem die Einstellung eines exakt gleichen Bremsdruckes in den angeschlossenen Radbremszylindern möglich ist, wobei das entsprechende Relaisventil ein Teil des Achsventilmoduls ist, wie z.B. in Anspruch 1 geschrieben worden ist.

Die das Achsventilmodul betreffende Aufgabe ist in Verbindung mit den Merkmalen des Oberbegriffs des Anspruchs 1 dadurch gelöst, dass in der zum Relaisventil führenden Steuerdruckleitung zwischen dem Umschaltventil und dem Steuerdruckeingang des Relaisventils und zwischen dem Umschaltventil und einem Abzweig der Steuerdruckleitung der ABS-Ventile ein Absperrventil angeordnet ist, mittels dem der an dem Steuerdruckeingang des Relaisventils anliegende Steuerdruck bedarfsweise einschließbar ist.

Die Erfindung geht von einer bisherigen Ausführung eines Achsventilmoduls einer Druckluftbremsanlage für die Betätigung der Radbremsen einer Fahrzeugachse eines Radfahrzeugs aus, das ein Relaisventil und jeweils ein ABS-Einlassventil und ein ABS-Auslassventil für mindestens einen Radbremszylinder jeder Seite der Fahrzeugachse aufweist. An den Steuerdruckeingang des Relaisventils ist eine Steuerdruckleitung angeschlossen, die über ein Umschaltventil wechselweise mit einer einen eingesteuerten Bremsdruck führenden Bremsdruckleitung oder mit einer einen Vorratsdruck führenden Vorratsdruckleitung verbindbar ist. Die ABS-Einlassventile und die ABS-Auslassventile sind jeweils als ein druckgesteuertes Membranventil mit einem zugeordneten Vorsteuerventil ausgebildet. Die Vorsteuerventile sind als getaktet steuerbare 3/2-Wege-Magnetschaltventile ausgeführt, über die jeweils ein Steuerdruckraum des zugeordneten Membranventils wechselweise mit einem an einer an den Arbeitsdruckausgang des Relaisventils angeschlossenen Achsbremsleitung beziehungsweise an der Steuerdruckleitung des Relaisventils abgegriffenen Steuerdruck oder dem Umgebungsdruck beaufschlagbar ist.

Durch die Betätigung des Umschaltventils kann ein beliebiger, an dem Steuerdruckeingang des Relaisventils anliegender Steuerdruck, der zwischen dem Bremsdruck in der Bremsdruckleitung und dem Vorratsdruck in der Vorratsdruckleitung liegt, eingestellt sowie durch die Betätigung des Absperrventils eingeschlossen werden. Dieser Bremsdruck wird dann in dem Relaisventil mit entsprechendem Luftvolumendurchsatz auch an dessen Arbeitsdruckausgang eingestellt. Somit liegt dieser Bremsdruck ohne eine Betätigung der im unbetätigten Zustand offenen ABS-Einlassventile und der im unbetätigten Zustand geschlossenen ABS-Auslassventile auch in den Radbremszylindern beider Seiten der Fahrzeugachse vor, so dass die Räder der Fahrzeugachse beidseitig mit identischer Bremskraft abgebremst werden, und eine Destabilisierung des Radfahrzeugs vermieden wird. Der Aufwand zur Ermöglichung dieser symmetrischen Bremsfunktion ist mit dem Einbau des zusätzlichen Absperrventils vergleichsweise gering.

Das Absperrventil kann als ein getaktet steuerbares 2/2-Wege-Magnetschaltventil mit einem Drucklufteingang und einem Druckluftausgang ausgebildet sein, an die jeweils ein Abschnitt der Steuerdruckleitung des Relaisventils angeschlossen ist, welche im unbetätigten Zustand miteinander verbunden und im betätigten Zustand gegeneinander abgesperrt sind.

Alternativ dazu kann das Absperrventil auch als ein getaktet steuerbares 3/2-Wege-Magnetschaltventil mit zwei Drucklufteingängen und einem Druckluftausgang ausgebildet sein, dessen erster Drucklufteingang und Druckluftausgang, an die jeweils ein Abschnitt der Steuerdruckleitung des Relaisventils angeschlossen ist, im unbetätigten Zustand miteinander verbunden und im betätigten Zustand gegeneinander abgesperrt sind, und dessen zweiter Drucklufteingang dauerhaft abgesperrt ist.

Durch die letztgenannte Ausführungsform kann auch vorgesehen sein, dass das Absperrventil baugleich mit den Vorsteuerventilen der ABS-Auslassventile beziehungsweise mit den Vorsteuerventilen der ABS-Einlassventile ausgeführt ist, welches auch fertigungstechnische und logistische Vorteile hat.

Zur weiteren Vereinfachung des Aufbaus des Achsventilmoduls kann auch vorgesehen sein, dass das Umschaltventil als ein getaktet steuerbares 3/2-Wege-Magnetschaltventil ausgebildet ist, mit einem ersten Drucklufteingang, an den die Bremsdruckleitung angeschlossen ist, mit einem zweiten Drucklufteingang, an den die Vorratsdruckleitung angeschlossen ist, und mit einem Druckluftausgang, an den die Steuerdruckleitung des Relaisventils angeschlossen ist, wobei der erste Drucklufteingang im unbetätigten Zustand mit dem Druckluftausgang verbunden sowie im betätigten Zustand gegenüber diesem abgesperrt ist, und dessen zweiter Drucklufteingang im unbetätigten Zustand gegenüber dem Druckluftausgang abgesperrt sowie im betätigten Zustand mit diesem verbunden ist. Hierdurch kann auch das Umschaltventil baugleich wie das Absperrventil der zweiten Ausführungsform und/oder wie die Vorsteuerventile für die ABS-Auslassventile beziehungsweise wie die Vorsteuerventile für die ABS-Einlassventile ausgeführt sein.

Die das Relaisventilmodul des Achsventilmoduls betreffende Aufgabe ist in Verbindung mit den Merkmalen des Anspruchs 1 dadurch gelöst, dass in der zum Relaisventil führenden Steuerdruckleitung zwischen dem Umschaltventil und dem Steuerdruckeingang des Relaisventils und zwischen dem Umschaltventil und einem Abzweig einer Steuerdruckleitung von angeschlossenen ABS-Ventilen ein Absperrventil angeordnet ist, mittels dem der an dem Steuerdruckeingang des Relaisventils anliegende Steuerdruck bedarfsweise einschließbar ist.

Gemäß einem Ausführungsbeispiel ist das Relaisventilmodul eines Achsventilmoduls einer Druckluftbremsanlage für die Betätigung von Radbremsen eines Radfahrzeugs offenbart, das ein Relaisventil aufweist. An den Steuerdruckeingang des Relaisventils ist eine Steuerdruckleitung angeschlossen, die über ein Umschaltventil wechselweise mit einer einen eingesteuerten Bremsdruck führenden Bremsdruckleitung oder mit einer einen Vorratsdruck führenden Vorratsdruckleitung verbindbar ist.

Beim erfindungsgemäßen Achsventilmodul kann vorteilhaft vorgesehen sein, dass an den Arbeitsdruckausgang des Relaisventils ein Drucksensor angeschlossen ist, dessen Messwerte einem elektronischen Steuergerät zuleitbar sind, welches die erwähnten direkt, also elektrisch gesteuerten Ventile ansteuert. Die Messwerte dieses Drucksensors ermöglichen eine Druckregelung in Sinne einer geschlossenen Druckregelschleife.

Zur weiteren Verdeutlichung der Erfindung ist der Beschreibung eine Zeichnung mit mehreren Ausführungsbeispielen beigefügt. In dieser Zeichnung zeigt
Fig. 1 den Aufbau einer ersten Ausführungsform eines erfindungsgemäßen Achsventilmoduls in einer schematischen Ansicht,
Fig. 2 den Aufbau einer zweiten Ausführungsform eines erfindungsgemäßen Achsventilmoduls in einer schematischen Ansicht,
Fig. 3 den Aufbau einer bisherigen Ausführung eines Achsventilmoduls in einer schematischen Ansicht,
Fig. 4 den Aufbau einer ersten Ausführungsform eines Relaisventilmoduls in einer schematischen Ansicht,
Fig. 5 den Aufbau einer zweiten Ausführungsform eines Relaisventilmoduls in einer schematischen Ansicht,
Fig. 6 den Aufbau einer bisherigen Ausführung eines Relaisventilmoduls in einer schematischen Ansicht.

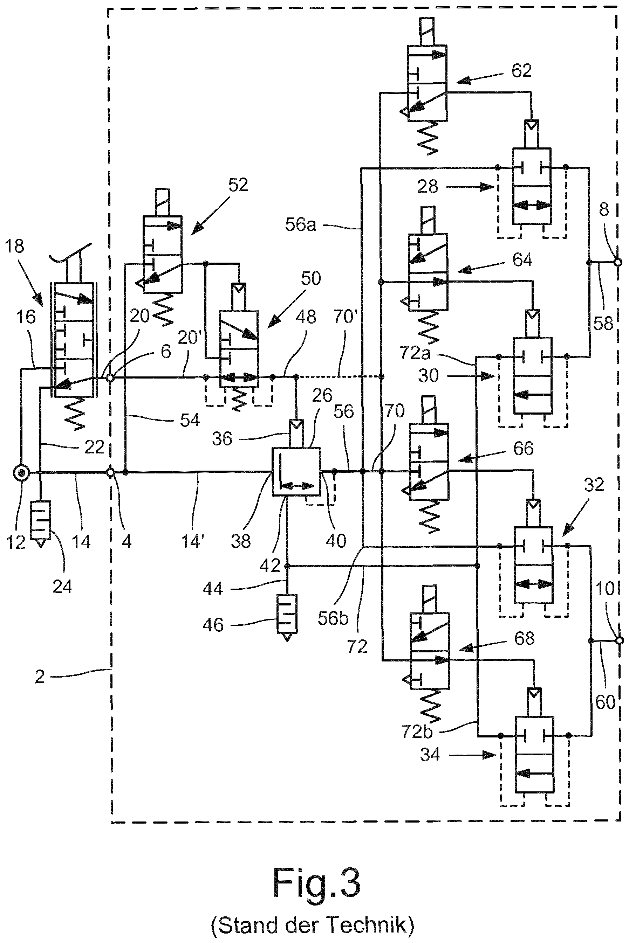

In der schematischen Ansicht von Fig. 3 ist eine bekannte Ausführungsform eines Achsventilmoduls 2 einer Druckluftbremsanlage für die Betätigung der Radbremsen einer Fahrzeugachse eines Radfahrzeugs dargestellt. Das Achsventilmodul 2 weist einen Vorratsdruckanschluss 4, einen eingangsseitigen Bremsdruckanschluss 6, einen ersten ausgangsseitigen Bremsdruckanschluss 8 für mindestens einen Radbremszylinder einer Radbremse für die linke Seite der Fahrzeugachse und einen zweiten ausgangsseitigen Bremsdruckanschluss 10 für mindestens einen Radbremszylinder einer Radbremse für die rechte Seite der Fahrzeugachse auf.

Eine an den Vorratsdruckanschluss 4 angeschlossene erste Vorratsdruckleitung 14 führt einen von einer Druckluftquelle 12 bereitgestellten Vorratsdruck. Eine an den eingangsseitigen Bremsdruckanschluss 8 angeschlossene Bremsdruckleitung 20 führt einen Bremsdruck, der durch eine über ein Bremspedalventil 18 kontinuierlich verstellbare Verbindung zwischen einer an die Druckluftquelle 12 angeschlossenen zweiten Vorratsdruckleitung 16 oder einer über einen Schalldämpfer 24 in die Umgebung führenden Entlüftungsleitung 22 einstellbar ist.

Das Achsventilmodul 2 umfasst ein Relaisventil 26 und jeweils ein ABS-Einlassventil 28, 32 sowie jeweils ein ABS-Auslassventil 30, 34 für mindestens einen Radbremszylinder einer Radbremse jeder Seite der Fahrzeugachse. Das Relaisventil 26 weist einen Steuerdruckeingang 36, einen Arbeitsdruckeingang 38, einen Arbeitsdruckausgang 40 und einen Entlüftungsausgang 42 auf. Der Arbeitsdruckeingang 38 ist über eine Vorratsdruckleitung 14' mit dem Vorratsdruckanschluss 4 verbunden. Der Entlüftungsausgang 42 steht über eine Entlüftungsleitung 44 und einen Schalldämpfer 46 mit der Umgebung in Verbindung.

An den Arbeitsdruckausgang 40 des Relaisventils 26 ist ein Drucksensor 41 angeschlossen, dessen Messwerte einem nicht dargestellten elektronischen Steuergerät zuleitbar sind, welches die direkt gesteuerten Ventile ansteuert. Die Messwerte des Drucksensors 41 ermöglichen eine Druckregelung in Sinne einer geschlossenen Druckregelschleife.

Eine an den Steuerdruckeingang 36 angeschlossene Steuerdruckleitung 48 ist über ein als ein druckgesteuertes 3/2-Wege-Schaltventil ausgebildetes Umschaltventil 50 und ein diesem zugeordnetes, als ein getaktet steuerbares 3/2-Wege-Magnetschaltventil ausgebildetes Vorsteuerventil 52 wechselweise mit einer an den eingangsseitigen Bremsdruckanschluss 6 angeschlossenen Bremsdruckleitung 20' oder der Vorratsdruckleitung 14' verbindbar.

Über das Vorsteuerventil 52 sind der Steuerdruckeingang 36 und ein erster Arbeitsdruckeingang des Umschaltventils 50 wechselweise mit der Umgebung oder über eine Verbindungsleitung 54 mit der Vorratsdruckleitung 14' verbindbar. Im unbetätigten, also unbestromten Zustand des Vorsteuerventils 52 ist die Steuerdruckleitung 48 des Relaisventils 26 über das Umschaltventil 50 mit der Bremsdruckleitung 20' verbunden. Im betätigten, also bestromten Zustand des Vorsteuerventils 52 ist die Steuerdruckleitung 48 des Relaisventils 26 über das Umschaltventil 50, das Vorsteuerventil 52 und die Verbindungsleitung 54 mit der Vorratsdruckleitung 14' verbunden. In dem Relaisventil 26 wird somit an dem Arbeitsdruckausgang 40 abhängig von dem Schaltzustand des Umschaltventils 50 mit entsprechendem Luftvolumendurchsatz entweder der über das Bremspedalventil 18 in die Bremsdruckleitung 20, 20' eingesteuerte Bremsdruck oder der in der Vorratsdruckleitung 14' anliegende Vorratsdruck eingestellt. Der Bremsdruck wird an dem Arbeitsdruckausgang 40 des Relaisventils 26 im normalen Fahrbetrieb, insbesondere bei betätigtem Bremspedalventil 18, eingestellt. Der Vorratsdruck wird an dem Arbeitsdruckausgang 40 des Relaisventils 26, insbesondere bei nicht betätigtem Bremspedalventil 18, dann eingestellt, wenn eine aktivierte Fahrsicherheitsfunktion, wie die der eingangs genannten Systeme ASR/ATC, RSC oder ESC/ESP, eine individuelle Betätigung der Radbremsen erfordert.

An den Arbeitsdruckausgang 40 des Relaisventils 26 ist eine Achsbremsleitung 56 angeschlossen, deren Zweige 56a, 56b eingangsseitig an die ABS-Einlassventile 28, 32 angeschlossen sind. Ausgangsseitig ist an den ABS-Einlassventilen 28, 32 jeweils eine zu dem jeweiligen ausgangsseitigen Bremsdruckanschluss 8, 10 führende Radbremsleitung 58, 60 an die ABS-Einlassventile 28, 32 angeschlossen. Mittels der ABS-Einlassventile 28, 32, die vorliegend als druckgesteuerte 2/2-Wege-Membranventile ausgebildet sind, können die Radbremsleitungen 58, 60 wechselweise mit dem jeweiligen Zweig 56a, 56b der Achsbremsleitung 56 verbunden oder gegenüber diesem abgesperrt werden.

Den ABS-Einlassventilen 28, 32 ist jeweils ein als ein getaktet steuerbares 3/2-Wege-Magnetschaltventil ausgebildetes Vorsteuerventil 62, 66 zugeordnet. Über diese Vorsteuerventile 62, 66 ist der jeweilige Steuerdruckeingang der ABS-Einlassventile 28, 32 wechselweise mit dem Umgebungsdruck oder mit einem über eine verzweigte Steuerdruckleitung 70 an der Achsbremsleitung 56 abgegriffenen Steuerdruck beaufschlagbar. Im unbetätigten, also unbestromten Zustand dieser Vorsteuerventile 62, 66 sind die ABS-Einlassventile 28, 32 geöffnet, so dass die Zweige 56a, 56b der Achsbremsleitung 56 mit den Radbremsleitungen 58, 60 verbunden sind, auch wenn die ABS-Einlassventile 28, 32 aufgrund ihrer Membranbauweise in Fig. 3 geschlossen dargestellt sind. Im betätigten, also bestromten Zustand der Vorsteuerventile 62, 66 sind die ABS-Einlassventile 28, 32 geschlossen, so dass die Radbremsleitungen 58, 60 dann gegenüber den Zweigen 56a, 56b der Achsbremsleitung 56 abgesperrt sind.

An die Entlüftungsleitung 44 des Relaisventils 26 ist eine weitere Entlüftungsleitung 72 angeschlossen, deren Zweige 72a, 72b eingangsseitig an jeweils ein zugeordnetes ABS-Auslassventil 30, 34 angeschlossen sind. Ausgangsseitig ist jeweils die zu dem jeweiligen ausgangsseitigen Bremsdruckanschluss 8, 10 führende Radbremsleitung 58, 60 an die ABS-Auslassventile 30, 34 angeschlossen. Über die ABS-Auslassventile 30, 34, die ebenfalls als druckgesteuerte 2/2-Wege-Membranventile ausgebildet sind, können die Radbremsleitungen 58, 60 wechselweise mit dem jeweiligen Zweig 72a, 72b der Entlüftungsleitung 72 verbunden oder gegenüber diesem abgesperrt werden.

Den ABS-Auslassventilen 30, 34 ist jeweils ein als ein getaktet steuerbares 3/2-Wege-Magnetschaltventil ausgebildetes Vorsteuerventil 64, 68 zugeordnet. Über diese Vorsteuerventile 64, 68 ist der jeweilige Steuerdruckeingang der ABS-Auslassventile 30, 34 wechselweise mit dem über die verzweigte Steuerdruckleitung 70 an der Steuerdruckleitung 48 des Relaisventils 26 abgegriffenen Steuerdruck oder dem Umgebungsdruck beaufschlagbar. Im unbetätigten, also unbestromten Zustand dieser Vorsteuerventile 64, 68 sind die ABS-Auslassventile 30, 34 geschlossen, so dass die Radbremsleitungen 58, 60 gegenüber den Zweigen 72a, 72b der Entlüftungsleitung 72 abgesperrt sind. Im betätigten, also bestromten Zustand der Vorsteuerventile 64, 68 sind die ABS-Auslassventile 30, 34 geöffnet, so dass die Radbremsleitungen 58, 60 dann über die Zweige 72a, 72b der Entlüftungsleitung 72 entlüftet werden.

In einer dazu alternativen Anordnung kann der Steuerdruck für die ABS-Ventile 28, 30, 32, 34 auch zwischen dem Umschaltventil 50 und dem Steuerdruckeingang 36 an der zum Relaisventil 26 führenden Steuerdruckleitung 48 abgegriffen werden. Zur Verdeutlichung dieser alternativen Anschlussvariante ist der eingangsseitige Zweig der Steuerdruckleitung 70' gestrichelt dargestellt.

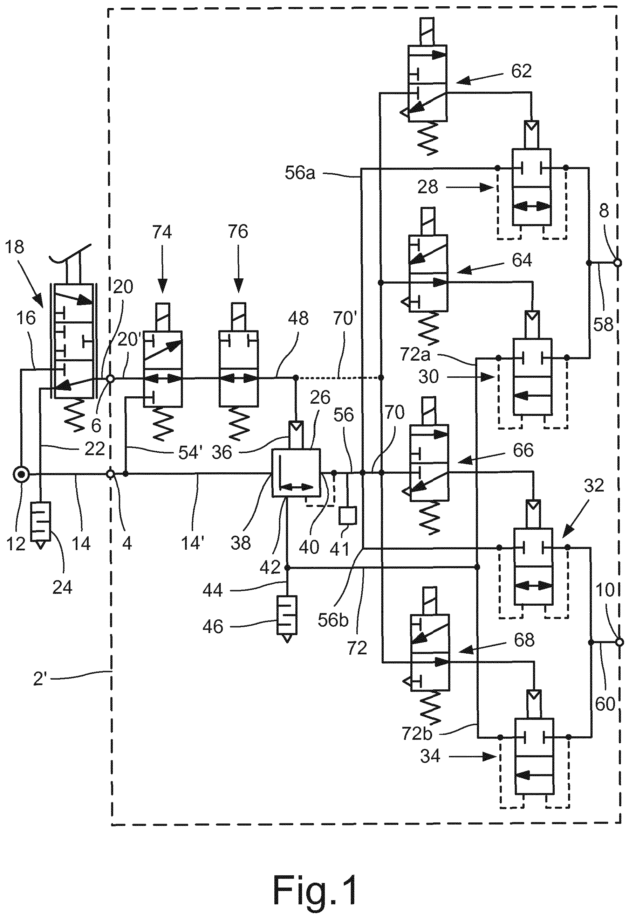

Eine in der schematischen Ansicht von Fig. 1 abgebildete erste Ausführungsform eines erfindungsgemäßen Achsventilmoduls 2' einer Druckluftbremsanlage unterscheidet sich von der bekannten Ausführung des Achsventilmoduls 2 gemäß Fig. 3 dadurch, dass nun anstelle des druckgesteuerten Umschaltventils 50 ein direkt ansteuerbares Umschaltventil 74 vorgesehen ist, und dass in der zum Relaisventil 26 führenden Steuerdruckleitung 48 zwischen dem Umschaltventil 74 und dem Steuerdruckeingang 36 des Relaisventils 26 beziehungsweise dem Abzweig der zu den ABS-Ventilen 28, 30, 32, 34 führenden Steuerdruckleitung 70' ein Absperrventil 76 angeordnet ist.

Das Umschaltventil 74 ist nun als ein getaktet steuerbares 3/2-Wege-Magnetschaltventil ausgebildet, mittels dem die an den Steuerdruckeingang 36 des Relaisventils 26 angeschlossene Steuerdruckleitung 48 wechselweise mit der an den eingangsseitigen Bremsdruckanschluss 6 angeschlossenen Bremsdruckleitung 20' oder mit einer an die Vorratsdruckleitung 14' angeschlossenen Verbindungsleitung 54' verbindbar ist. Im unbetätigten, also unbestromten Zustand des Umschaltventils 74 ist die Steuerdruckleitung 48 des Relaisventils 26 mit der Bremsdruckleitung 20' verbunden. Im betätigten, also bestromten Zustand des Umschaltventils 74 ist die Steuerdruckleitung 48 des Relaisventils 26 über die Verbindungsleitung 54' mit der Vorratsdruckleitung 14' verbunden. Das Umschaltventil 74 ist vorteilhaft baugleich mit den Vorsteuerventilen 64, 68 für die ABS-Auslassventile 30, 34 ausgeführt, welches fertigungstechnische und logistische Vorteilen hat.

Das Absperrventil 76 ist als ein getaktet steuerbares 2/2-Wege-Magnetschaltventil mit einem Drucklufteingang und einem Druckluftausgang ausgebildet, mittels dem der an dem Steuerdruckeingang 36 des Relaisventils 26 anliegende Steuerdruck bedarfsweise einschließbar ist. Im unbetätigten, also unbestromten Zustand des Absperrventils 76 sind der Drucklufteingang und der Druckluftausgang, an die jeweils ein Abschnitt der Steuerdruckleitung 48 des Relaisventils 26 angeschlossen ist, miteinander verbunden. Im betätigten, also bestromten Zustand des Absperrventils 76 sind der Drucklufteingang und der Druckluftausgang gegeneinander abgesperrt.

Durch die Betätigung des Umschaltventils 74 kann ein beliebiger, an dem Steuerdruckeingang 36 des Relaisventils 26 anliegender Steuerdruck, der zwischen dem Bremsdruck in der Bremsdruckleitung 20, 20' und dem Vorratsdruck in der Vorratsdruckleitung 14, 14' liegt, eingestellt und durch die Betätigung des Absperrventils 76 eingeschlossen werden. Dieser Bremsdruck wird dann in dem Relaisventil 26 mit entsprechendem Luftvolumendurchsatz auch an dessen Arbeitsdruckausgang 40 eingestellt. Somit liegt dieser Bremsdruck ohne eine Betätigung der im unbetätigten Zustand offenen ABS-Einlassventile 28, 32 und der im unbetätigten Zustand geschlossenen ABS-Auslassventile 30, 34 auch in den Radbremszylindern beider Seiten der Fahrzeugachse vor, so dass die Räder der Fahrzeugachse beidseitig mit identischer Bremskraft abgebremst werden, und eine Destabilisierung des Radfahrzeugs vermieden wird. Der Aufwand zur Ermöglichung dieser symmetrischen Bremsfunktion ist mit dem Einbau des zusätzlichen Absperrventils 76 sehr gering.

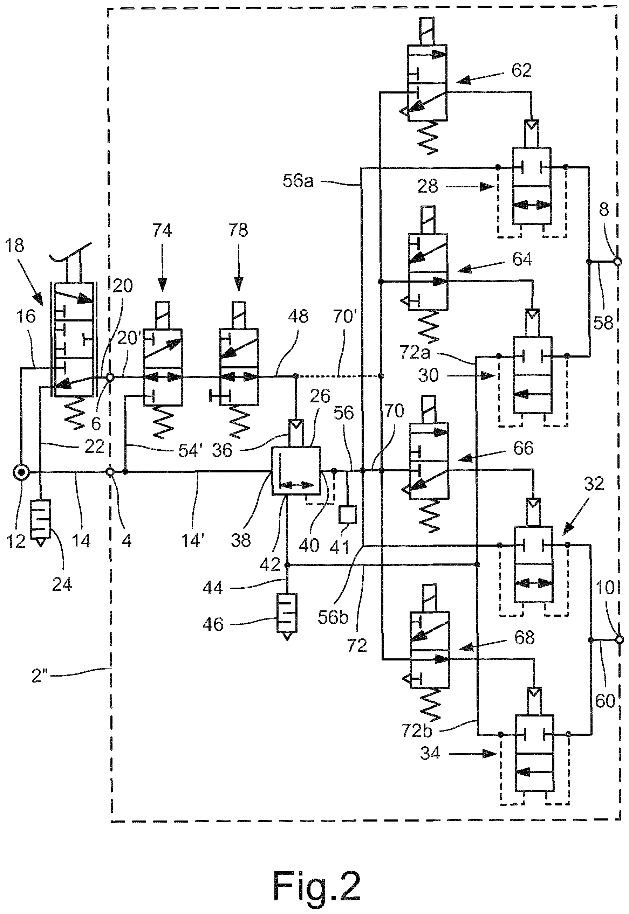

Eine in der schematischen Ansicht von Fig. 2 abgebildete zweite Ausführungsform des erfindungsgemäßen Achsventilmoduls 2" einer Druckluftbremsanlage unterscheidet sich von dem ersten Ausführungsbeispiel des erfindungsgemäßen Achsventilmoduls 2' gemäß Fig. 1 nur dadurch, dass das in der Steuerdruckleitung 48 des Relaisventils 26 angeordnete Absperrventil 78 bei gleicher Funktion als ein getaktet steuerbares 3/2-Wege-Magnetschaltventil mit zwei Drucklufteingängen und einem Druckluftausgang ausgebildet ist.

Im unbetätigten, also unbestromten Zustand des Absperrventils 78 sind der erste Drucklufteingang und der Druckluftausgang, an die jeweils ein Abschnitt der Steuerdruckleitung 48 des Relaisventils 26 angeschlossen ist, miteinander verbunden. Im betätigten, also bestromten Zustand des Absperrventils 78 sind der erste Drucklufteingang und der Druckluftausgang gegeneinander abgesperrt. Der zweite Drucklufteingang des Absperrventils 78 ist dauerhaft abgesperrt und ohne Funktion. Durch die Verwendung eines derartigen 3/2-Wege-Magnetschaltventils für die Absperrfunktion kann auch das Absperrventil 78 kostengünstig baugleich wie die Vorsteuerventile 64, 68 der ABS-Auslassventile 30, 34 und das Umschaltventil 74 ausgeführt werden.

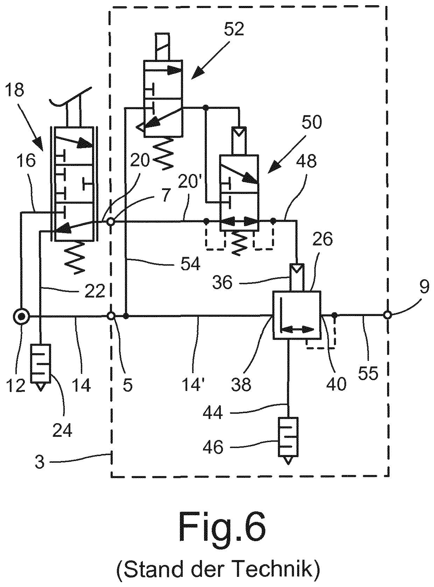

In der schematischen Darstellung der Fig. 6 ist eine bekannte Ausführungsform eines Relaisventilmoduls 3 einer Druckluftbremsanlage für die Betätigung von Radbremsen eines Radfahrzeugs dargestellt. Das Relaisventilmodul 3 weist einen Vorratsdruckanschluss 5, einen eingangsseitigen Bremsdruckanschluss 7 sowie einen ausgangsseitigen Bremsdruckanschluss 9 auf.

Eine an den Vorratsdruckanschluss 5 angeschlossene erste Vorratsdruckleitung 14 führt einen von einer Druckluftquelle 12 bereitgestellten Vorratsdruck. Eine an den eingangsseitigen Bremsdruckanschluss 9 angeschlossene Bremsdruckleitung 20 führt einen Bremsdruck, der durch eine über ein Bremspedalventil 18 kontinuierlich verstellbare Verbindung zwischen einer an die Druckluftquelle 12 angeschlossenen zweiten Vorratsdruckleitung 16 oder einer über einen Schalldämpfer 24 in die Umgebung führenden Entlüftungsleitung 22 einstellbar ist. Der ausgangsseitige Bremsdruckanschluss 9 steht über eine Bremsdruckleitung 55 mit dem Arbeitsdruckausgang 40 des Relaisventils 26 in Verbindung. Der Aufbau und die Anordnung des Relaisventils 26 und des Umschaltventils 50 sowie dessen Vorsteuerventils 52 entsprechen denjenigen in dem bekannten Achsventilmodul 2 gemäß Fig. 3, so dass hier gleiche Bezugszeichen verwendet werden und auf eine weitere Beschreibung verzichtet wird.

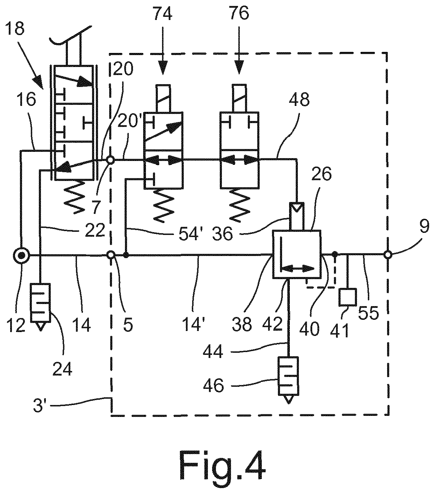

Eine in der schematischen Ansicht von Fig. 4 abgebildete erste Ausführungsform eines Relaisventilmoduls 3' einer Druckluftbremsanlage unterscheidet sich von der bisherigen Ausführung des Relaisventilmoduls 3 gemäß Fig. 6 dadurch, dass nun anstelle des druckgesteuerten Umschaltventils 50 ein direkt ansteuerbares Umschaltventil 74 vorgesehen ist, und dass in der zum Relaisventil 26 führenden Steuerdruckleitung 48 zwischen dem Umschaltventil 74 und dem Steuerdruckeingang 36 des Relaisventils 26 ein Absperrventil 76 angeordnet ist.

Das Umschaltventil 74 ist als ein getaktet steuerbares 3/2-Wege-Magnetschaltventil ausgebildet, mittels dem die an den Steuerdruckeingang 36 des Relaisventils 26 angeschlossene Steuerdruckleitung 48 wechselweise mit der an den eingangsseitigen Bremsdruckanschluss 7 angeschlossenen Bremsdruckleitung 20' oder mit einer an die Vorratsdruckleitung 14' angeschlossenen Verbindungsleitung 54' verbindbar ist. Das Absperrventil 76 ist als ein getaktet steuerbares 2/2-Wege-Magnetschaltventil mit einem Drucklufteingang und einem Druckluftausgang ausgebildet, mittels dem der an dem Steuerdruckeingang 36 des Relaisventils 26 anliegende Steuerdruck bedarfsweise einschließbar ist. Die Funktionen des Umschaltventils 74 und des Absperrventils 76 entsprechen denjenigen der betreffenden Ventile in dem Achsventilmodul 2' gemäß Fig. 1.

Auch bei diesem Relaisventilmoduls 3' ist an den Arbeitsdruckausgang 40 des Relaisventils 26 ist ein Drucksensor 41 angeschlossen, dessen Messwerte einem nicht dargestellten elektronischen Steuergerät zuleitbar sind, welches die direkt gesteuerten Ventile ansteuert. Die Messwerte des Drucksensors 42 ermöglichen eine Druckregelung in Sinne einer geschlossenen Druckregelschleife.

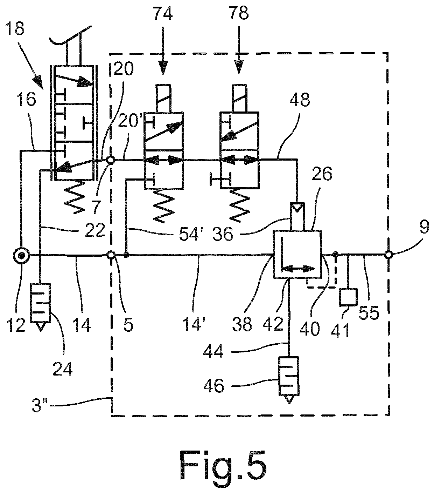

Eine in der schematischen Ansicht von Fig. 5 abgebildete zweite Ausführungsform eines Relaisventilmoduls 3" einer Druckluftbremsanlage unterscheidet sich von dem ersten Ausführungsbeispiel des erfindungsgemäßen Relaisventilmoduls 3' gemäß Fig. 4 nur dadurch, dass das in der zum Relaisventil 26 führenden Steuerdruckleitung 48 angeordnete Absperrventil 78 bei gleicher Funktion als ein getaktet steuerbares 3/2-Wege-Magnetschaltventil mit zwei Drucklufteingängen und einem Druckluftausgang ausgebildet ist, dessen zweiter Drucklufteingang dauerhaft abgesperrt und ohne Funktion ist. Die Funktionen des Umschaltventils 74 und des Absperrventils 78 entsprechen denjenigen der betreffenden Ventile in dem Achsventilmodul 2" gemäß Fig. 2. Durch die Verwendung eines derartigen 3/2-Wege-Magnetschaltventils für die Absperrfunktion können das Umschaltventil 74 und das Absperrventil 78 kostengünstig baugleich ausgebildet sein.

### Bezugszeichenliste (Bestandteil der Beschreibung)

- 2: Achsventilmodul (bisherige Ausführungsform)
- 2': Achsventilmodul (erste erfindungsgemäße Ausführungsform)
- 2": Achsventilmodul (zweite erfindungsgemäße Ausführungsform)
- 3: Relaisventilmodul (bisherige Ausführungsform)
- 3': Relaisventilmodul (erste Ausführungsform)
- 3": Relaisventilmodul (zweite Ausführungsform)
- 4: Erster Vorratsdruckanschluss
- 5: Zweiter Vorratsdruckanschluss
- 6: Eingangsseitiger Bremsdruckanschluss
- 7: Eingangsseitiger Bremsdruckanschluss
- 8: Erster ausgangsseitiger Bremsdruckanschluss
- 9: Ausgangsseitiger Bremsdruckanschluss
- 10: Zweiter ausgangsseitiger Bremsdruckanschluss
- 12: Druckluftquelle
- 14, 14': Erste Vorratsdruckleitung
- 16: Zweite Vorratsdruckleitung
- 18: Bremspedalventil
- 20, 20': Bremsdruckleitung
- 22: Entlüftungsleitung
- 24: Erster Schalldämpfer
- 26: Relaisventil
- 28: Erstes ABS-Einlassventil
- 30: Erstes ABS-Auslassventil
- 32: Zweites ABS-Einlassventil
- 34: Zweites ABS-Auslassventil
- 36: Steuerdruckeingang
- 38: Arbeitsdruckeingang
- 40: Arbeitsdruckausgang
- 41: Drucksensor am Arbeitsdruckausgang
- 42: Entlüftungsausgang
- 44: Entlüftungsleitung
- 46: Zweiter Schalldämpfer
- 48: Steuerdruckleitung
- 50: Umschaltventil, druckgesteuertes 3/2-Wege-Schaltventil
- 52: Vorsteuerventil, 3/2-Wege-Magnetschaltventil
- 54, 54': Verbindungsleitung
- 55: Bremsdruckleitung
- 56: Achsbremsleitung
- 56a, 56b: Zweige der Achsbremsleitung 56
- 58: Radbremsleitung (linke Seite)
- 60: Radbremsleitung (rechte Seite)
- 62: Vorsteuerventil, 3/2-Wege-Magnetschaltventil
- 64: Vorsteuerventil, 3/2-Wege-Magnetschaltventil
- 66: Vorsteuerventil, 3/2-Wege-Magnetschaltventil
- 68: Vorsteuerventil, 3/2-Wege-Magnetschaltventil
- 70, 70': Steuerdruckleitung
- 72: Entlüftungsleitung
- 72a, 72b: Zweige der Entlüftungsleitung 72
- 74: Umschaltventil, 3/2-Wege-Magnetschaltventil
- 76: Absperrventil, 2/2-Wege-Magnetschaltventil
- 78: Absperrventil, 3/2-Wege-Magnetschaltventil

## Patentansprüche

1. Achsventilmodul (2', 2") einer Druckluftbremsanlage für die Betätigung der Radbremsen einer Fahrzeugachse eines Radfahrzeugs, mit einem Relaisventil (26), an dessen Steuerdruckeingang (36) eine Steuerdruckleitung (48) angeschlossen ist, die über ein Umschaltventil (50, 74) wechselweise mit einer einen eingesteuerten Bremsdruck führenden Bremsdruckleitung (20, 20') oder mit einer einen Vorratsdruck führenden Vorratsdruckleitung (14, 14') verbindbar ist, und mit jeweils einem ABS-Einlassventil (28, 32) sowie einem ABS-Auslassventil (30, 34) für mindestens einen Radbremszylinder jeder Seite der Fahrzeugachse, welche jeweils als ein druckgesteuertes Membranventil mit einem zugeordneten Vorsteuerventil (62, 64, 66, 68) ausgebildet sind, wobei diese Vorsteuerventile (62, 64, 66, 68) als getaktet steuerbare 3/2-Wege-Magnetschaltventile ausgeführt sind, über die jeweils ein Steuerdruckraum des zugeordneten Membranventils (28, 30, 32, 34) wechselweise mit einem an einer an den Arbeitsdruckausgang (40) des Relaisventils (26) angeschlossenen Achsbremsleitung (56) beziehungsweise an der Steuerdruckleitung (48) des Relaisventils (26) abgegriffenen Steuerdruck oder mit dem Umgebungsdruck beaufschlagbar ist, wobei in der zum Relaisventil (26) führenden Steuerdruckleitung (48) zwischen dem Umschaltventil (50, 74) und dem Steuerdruckeingang (36) des Relaisventils (26) und zwischen dem Umschaltventil (50, 74) und einem Abzweig einer Steuerdruckleitung (70') der ABS-Ventile (28, 30, 32, 34) ein Absperrventil (76, 78) angeordnet ist, mittels dem der an dem Steuerdruckeingang (36) des Relaisventils (26) anliegende Steuerdruck bedarfsweise einschließbar ist, und wobei das Absperrventil (76) als ein getaktet steuerbares 2/2-Wege-Magnetschaltventil mit einem Drucklufteingang und einem Druckluftausgang ausgebildet ist, an die jeweils ein Abschnitt der Steuerdruckleitung (48) des Relaisventils (26) angeschlossen ist, welche im unbetätigten Zustand miteinander verbunden sowie im betätigten Zustand gegeneinander abgesperrt sind.

2. Achsventilmodul nach Anspruch 1, **dadurch gekennzeichnet, dass** das Umschaltventil (74) als ein getaktet steuerbares 3/2-Wege-Magnetschaltventil ausgebildet ist, mit einem ersten Drucklufteingang, an den die Bremsdruckleitung (20') angeschlossen ist, mit einem zweiten Drucklufteingang, an den die Vorratsdruckleitung (14') angeschlossen ist, und mit einem Druckluftausgang, an den die Steuerdruckleitung (48) des Relaisventils (26) angeschlossen ist, wobei der erste Drucklufteingang im unbetätigten Zustand mit dem Druckluftausgang verbunden sowie im betätigten Zustand gegenüber diesem abgesperrt ist, und dessen zweiter Drucklufteingang im unbetätigten Zustand gegenüber dem Druckluftausgang abgesperrt und im betätigten Zustand mit diesem verbunden ist.

3. Achsventilmodul nach Anspruch 1 oder 2, **dadurch gekennzeichnet, dass** das Umschaltventil (74) baugleich mit dem Absperrventil (78) und/oder den Vorsteuerventilen (64, 68) der ABS-Auslassventile (30, 34) beziehungsweise den Vorsteuerventilen (62, 66) der ABS-Einlassventile (28, 32) ausgeführt ist.

4. Achsventilmodul nach einem der vorherigen Ansprühe, **dadurch gekennzeichnet, dass** an den Arbeitsdruckausgang (40) des Relaisventils (26) ein Drucksensor (41) angeschlossen ist, dessen Messwerte einem elektronischen Steuergerät zuleitbar sind, welches die direkt gesteuerten Ventile ansteuert.

## Claims

1. Axle valve module (2', 2") of a compressed air braking system for actuating the wheel brakes of a vehicle axle of a wheeled vehicle, the axle valve module comprising a relay valve (26), to the control pressure input (36) of which a control pressure line (48) is connected, which control pressure line can be connected via a switchover valve (50, 74) alternately to a brake pressure line (20, 20') conducting an introduced brake pressure or to a supply pressure line (14, 14') conducting a supply pressure, and comprising in each case an ABS inlet valve (28, 32) and an ABS outlet valve (30, 34) for at least one wheel brake cylinder of each side of the vehicle axle, the ABS inlet valve and the ABS outlet valve each being designed as a pressure-controlled diaphragm valve having an associated pilot valve (62, 64, 66, 68), wherein the pilot valves (62, 64, 66, 68) are designed as cyclically controllable 3/2-way solenoid switching valves, via which a control pressure, which is taken from an axle brake line (56) connected to the working pressure output (40) of the relay valve (26) or taken from the control pressure line (48) of the relay valve (26), or ambient pressure can be applied in each case alternately to a control pressure chamber of the associated diaphragm valve (28, 30, 32, 34), wherein a shutoff valve (76, 78) is arranged between the switchover valve (50, 74) and the control pressure input (36) of the relay valve (26) and between the switchover valve (50, 74) and a branch of the control pressure line (70') of the ABS valves (28, 30, 32, 34) in the control pressure line (48) leading to the relay valve (26), by means of which shutoff valve the control pressure applied at the control pressure input (36) of the relay valve (26) can be included as required, and wherein the shutoff valve is designed as a cyclically controllable 2/2-way solenoid switching valve and has a compressed air input and a compressed air output, to which a portion of the control pressure line (48) of the relay valve (26) is connected in each case and which are interconnected in the non-actuated state and are shut off with respect to one another in the actuated state.

2. Axle valve module according to claim 1, **characterized in that** the switchover valve (74) is designed as a cyclically controllable 3/2-way solenoid switching valve, comprising a first compressed air input to which the brake pressure line (20') is connected, comprising a second compressed air input to which the supply pressure line (14') is connected, and comprising a compressed air output to which the control pressure line (48) of the relay valve (26) is connected, the first compressed air input being connected to the compressed air output in the non-actuated state and being shut off relative thereto in the actuated state, and its second compressed air input being shut off with respect to the compressed air output in the non-actuated state and being connected thereto in the actuated state.

3. Axle valve module according to claim 1 or 2, **characterized in that** the switchover valve (74) is structurally identical to the shut-off valve (78) and/or the pilot valves (64, 68) of the ABS outlet valves (30, 34) or the pilot valves (62, 66) of the ABS inlet valves (28, 32).

4. Axle valve module according to any of the preceding claims, **characterized in that** a pressure sensor (41) is connected to the working pressure output (40) of the relay valve (26), the measured values of which sensor can be supplied to an electronic control unit which controls the directly controlled valves.

## Revendications

1. Module de soupape d'essieu (2', 2") d'un système de freinage pneumatique pour l'actionnement des freins de roue d'un essieu de véhicule d'un véhicule à roues, comportant une soupape relais (26), à l'entrée de pression de commande (36) de laquelle est raccordée une conduite de pression de commande (48) qui peut être reliée alternativement à une conduite de pression de freinage (20, 20') acheminant une pression de freinage réglée ou à une conduite de pression de réserve (14, 14') acheminant une pression de réserve par l'intermédiaire d'une soupape de commutation (50, 74), et comportant respectivement une soupape d'admission ABS (28, 32) ainsi qu'une soupape d'échappement ABS (30, 34) pour au moins un cylindre de frein de roue de chaque côté de l'essieu de véhicule, lesquelles sont respectivement réalisées en tant que soupape à membrane commandée par pression comportant une soupape pilote (62, 64, 66, 68) associée, dans lequel lesdites soupapes pilotes (62, 64, 66, 68) sont conçues en tant que soupapes de commutation électromagnétiques à 3/2 voies pouvant être commandées de manière cadencée, par l'intermédiaire desquelles respectivement un espace de pression de commande de la soupape à membrane (28, 30, 32, 34) associée peut être sollicité alternativement par une pression de commande, laquelle est prélevée sur une conduite de frein d'essieu (56) raccordée à la sortie de pression de travail (40) de la soupape relais (26) ou sur la conduite de pression de commande (48) de la soupape relais (26), ou par la pression ambiante, dans lequel une soupape de fermeture (76, 78) est disposée dans la conduite de pression de commande (48) menant à la soupape relais (26) entre la soupape de commutation (50, 74) et l'entrée de pression de commande (36) de la soupape relais (26) et entre la soupape de commutation (50, 74) et un embranchement d'une conduite de pression de commande (70') des soupapes ABS (28, 30, 32, 34), au moyen de laquelle soupape de fermeture la pression de commande appliquée au niveau de l'entrée de pression de commande (36) de la soupape relais (26) peut être bloquée en cas de besoin, et dans lequel la soupape de fermeture (76) est réalisée en tant que soupape de commutation électromagnétique à 2/2 voies pouvant être commandée de manière cadencée et comportant une entrée d'air comprimé et une sortie d'air comprimé, auxquelles respectivement une section de la conduite de pression de commande (48) de la soupape relais (26) est raccordée, lesquelles sections, à l'état non actionné, sont reliées l'une à l'autre et, à l'état actionné, sont fermées l'une contre l'autre.

2. Module de soupape d'essieu selon la revendication 1, **caractérisé en ce que** la soupape de commutation (74) est réalisée en tant que soupape de commutation électromagnétique à 3/2 voies pouvant être commandée de manière cadencée, comportant une première entrée d'air comprimé à laquelle est raccordée la conduite de pression de freinage (20'), comportant une seconde entrée d'air comprimé à laquelle est raccordée la conduite de pression de réserve (14') et comportant une sortie d'air comprimé à laquelle est raccordée la conduite de pression de commande (48) de la soupape relais (26), dans lequel la première entrée d'air comprimé est reliée à la sortie d'air comprimé à l'état non actionné et est fermée par rapport à celle-ci à l'état actionné, et dont la seconde entrée d'air comprimé est fermée par rapport à la sortie d'air comprimé à l'état non actionné et est reliée à celle-ci à l'état actionné.

3. Module de soupape d'essieu selon la revendication 1 ou 2,
**caractérisé en ce que** la soupape de commutation (74) est conçue de manière à être identique à la soupape de fermeture (78) et/ou aux soupapes pilotes (64, 68) des soupapes d'échappement ABS (30, 34) ou aux soupapes pilotes (62, 66) des soupapes d'admission ABS (28, 32).

4. Module de soupape d'essieu selon l'une quelconque des revendications précédentes, **caractérisé en ce qu'**un capteur de pression (41) dont les valeurs de mesure peuvent être transmises à un appareil de commande électronique est raccordé à la sortie de pression de travail (40) de la soupape relais (26), lequel capteur de pression commande les soupapes à commande directe.
